(19) Europäisches Patentamt / European Patent Office / Office européen des brevets

(11) **EP 1 906 399 B1**

(12) **EUROPEAN PATENT SPECIFICATION**

(45) Date of publication and mention
of the grant of the patent:
**18.08.2010 Bulletin 2010/33**

(51) Int Cl.:
*G11B 7/135* (2006.01)     *G02B 3/02* (2006.01)
*G02B 13/18* (2006.01)     *G02B 27/64* (2006.01)
*G02B 27/44* (2006.01)

(21) Application number: **07105137.9**

(22) Date of filing: **28.03.2007**

(54) **Object lens for an optical pickup device**

Objektlinse für eine optische Aufnahmevorrichtung

Lentille d'objet pour dispositif de sélection optique

(84) Designated Contracting States:
**DE GB NL**

(30) Priority: **27.09.2006 KR 20060094338**

(43) Date of publication of application:
**02.04.2008 Bulletin 2008/14**

(73) Proprietor: **SAMSUNG ELECTRONICS CO., LTD.**
**Suwon-si**
**Gyeonggi-do 442-742 (KR)**

(72) Inventors:
• **Yoo, Jang-hoon**
Yangcheon-gu
Seoul (KR)

• **Shin, Dong-ho**
Yongin-si
Gyeonggi-do (KR)
• **Park, Soo-han**
Yongin-si
Gyeonggi-do, (KR)

(74) Representative: **Pisani, Diana Jean et al**
**Venner Shipley LLP**
**20 Little Britain**
**London EC1A 7DH (GB)**

(56) References cited:
**EP-A- 1 202 259     US-A1- 2002 012 313**
**US-A1- 2002 097 504     US-A1- 2003 035 225**
**US-A1- 2004 080 831     US-A1- 2004 114 245**
**US-A1- 2005 063 283**

EP 1 906 399 B1

**Description**

The present invention relates to an object lens with a high numerical aperture and an optical pickup device adopting the same.

An optical recording and/or reproducing apparatus records and/or reproduces information to and/or from an optical disc, which is a type of optical information storage medium that uses light focused by an object lens. The recording capacity of the optical information storage medium is determined by the size of a light spot generated by the optical recording and/or reproducing apparatus to record or read information. The size of the light spot S is determined by the wavelength λ of the light used and the numerical aperture (NA) of an object lens as shown in Equation 1.

$$\text{Equation (1)}$$

$$S = \frac{2}{\pi} \cdot \frac{\lambda}{NA}$$

Therefor, in order to reduce the size of a light spor formed on an optical disc, for high density recording and/or reproducing to and/or from the optical disc, a short wavelength light source and a high NA object lens arc desirable

US2002/0097504 describes an optical system including a diffraction lens.

US 2004/0114245 also describes an optical system including an object lens and a diffraction lens said system having a NA of not less than 0.8 and which system is adapted to correct chromatic aberration.

A digital versatile disk (DVD) uses light having a wavelength of 650 nm or 635 nm and an object lens having an NA of 0.6, or 0.65 for a recordable type, as is wall known. When the diameter and track pitch of the disk are 120 mm and 0.74 μm respectively, the DVD has a recording capacity of about 4.7 GB or more for a single side. As a result, the DVD may be an unsuitable recording medium for high definition (HD) level moving picture information. A medium having a recording capacity of, for example, 23 GB of more for a single side is needed for recording HD level moving picture information having a duration of 135 minutes.

To meet the demand for a high density recording capacity, high density optical discs have been developed Such high density optical discs, that is, a next generation DVD (hereinafter, referred to as a HD-DVD or high definition-DVD), have a narrower track than a DVD. Blue light having a wavelength in the range of about 405 nm to 408 nm is used to record to and/or read from a HD-DVD, in conjunction with an object lens having an NA of 0.6 or more. The Blu-ray disk (BD) has also been developed as a next generation high density optical information recording storage medium. BDs require an object lens having a high NA, such as 0.85 and blue light of a short wavelength, in the range of about 405 nm to 408 nm, and have a recording capacity of about 20 GB or more.

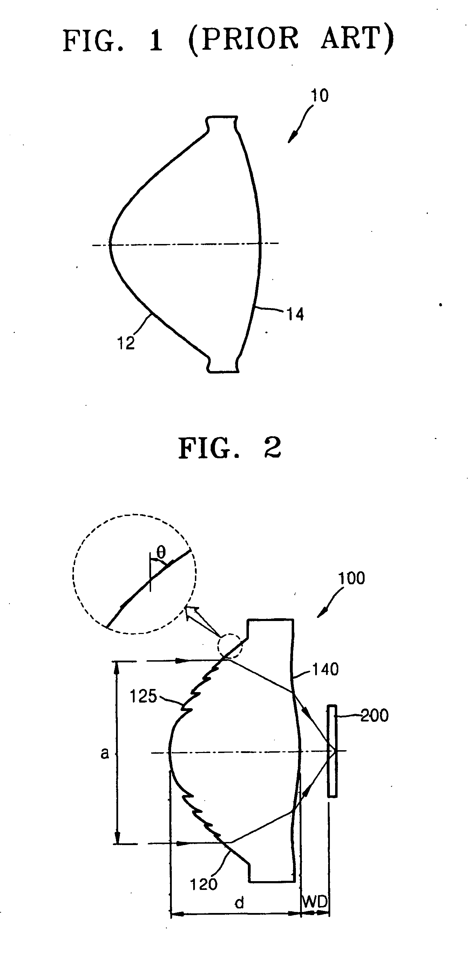

FIG. 1 shows the structure of a conventional object lens 10. The conventional object lens 10 includes a first surface 12, that is a light incident surface, and a second surface 14, that is a light exit surface. The first surface 12 is a spherical or aspherical surface having a large curvature. The second surface 14 is either a flat surface or a surface having a relatively small curvature. A plastic lens 10 is preferred to a glass lens, due to factors to be considered for mass production, including yield, processing ability and life span. However, since the refractivity of plastic is generally lower than that of glass, it is difficult to manufacture an object lens 10 with a high NA in the form of a single unit lens using plastic. More specifically, it is difficult to manufacture a plastic object lens 10 with a high NA while avoiding significant optical aberrations due to the following manufacturing limitation. For the object lens 10 to have a short focal distance and a high NA, the lens surfaces 12 and 14 must have a large curvature, so that an inclination angle of the first surface 12 increases.

However, if the inclination angle exceeds a given threshold, the manufacture of a mold becomes difficult and, accordingly, production yield is lowered. Therefore, there is a need for an object lens having a high NA which can be easily manufactured.

In addition, in an optical pickup apparatus for reading/recording to a Blu-ray disk, laser diodes of blue wavelengths are temperature sensitive. The wavelength of the light emitted by such a laser diode may change according to the change in temperature. Therefore, an object lens capable of correcting, reducing or avoiding chromatic aberrations to accommodate such wavelength changes is necessary.

An object of the present invention is the provision of an object lens having a high NA and a small inclination angle of a lens surface that can be mass produced. Another object of the present invention is the provision of an optical pickup device capable of recording and/or reproducing information onto and/or from a high density recording medium.

Said objects are realized by the features defined in the appended claims.

Examples of embodiments of the present invention will now be described with reference to the accompanying drawings, of which:

FIG. 1 is a view of a conventional object lens 10;
FIG. 2 is a view of an object lens 100 according to an embodiment of the present invention;
FIG. 3 depicts parameters used in expressions for representing an aspherical surface; and
FIG. 4 is a view of an optical pickup device 300 according to an embodiment of the present invention.

In the following detailed description, like reference numerals refer to the like elements throughout. In the drawings, the thickness of layers are exaggerated for clarity.

FIG. 2 is a view of an object lens 100 according to an embodiment of the present invention. Referring to FIG. 2, an object lens 100 includes a first surface 120 that is an incident surface on which light is incident, and a second surface 140 from which light focused toward a recording medium 200 is output. A diffractive optical element (DOE) is disposed on at least one of the first and second lens surfaces 120 and 140. In the example shown in FIG. 2, a diffractive optical element 125 is disposed on the first surface 120. It is understood that the DOE may be provided on the object lens in various ways. For example, the DOE may be permanently fixed to the object lens 100. Alternatively, the DOE may be detachably attached to the object lens 100 so that the DOE can be easily removed and/or replaced.

The reference numerals "a", "d" and "WD" denote an effective diameter, a central thickness, and a working distance respectively. While not essential, it is preferable for the object lens 100 to have a working distance WD which is as short as possible, for miniaturization purposes, and also a WD that is less than the central thickness D. It is understood, however, that a wide range of working distances may be used in various embodiments of the present invention and that it is not essential for the WD to be less than the central thickness D.

The object lens 100 is preferably formed using a polymer material, in view of factors to be considered for mass production, such as yield, processing ability and life span. This polymer material is one type of plastic, however, it may be other types of polymers as well. Furthermore, it is understood that it is not essential for the object lens 100 to be made from a polymer material. Also, the effective diameter "a", which is a diameter of an entrance pupil through which light passes, is preferably less than or equal to 1.5 times the central thickness "D".

The first and second surfaces 120 and 140 may be aspherical surfaces, where the aspherical surface equation is as follows:

(Equation 2)

$$z(h) = \frac{\dfrac{h^2}{R}}{1 + \sqrt{1 - (1+K)\dfrac{h^2}{R}}} + Ah^2 + Bh^6 + Ch^8 + Dh^{10} + Eh^{12} + Fh^{14} + \ldots,$$

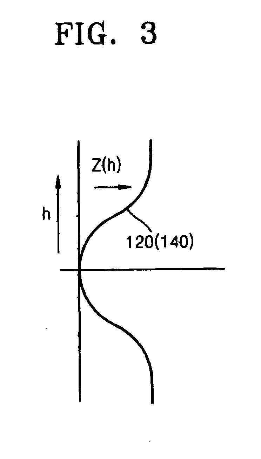

where "h" is a height from an optical axis, "z" is a depth from an apex of a surface, as shown in FIG. 3, "R" is a radius of curvature, "K" is a conic constant, and "A, B, C, D, E, F..." are aspherical coefficients.

The provision of the diffractive optical element 125 permits the inclination angle of the first lens surface 120 to be decreased and chromatic aberrations due to temperature-dependent wavelength changes to be corrected. The detailed form of the diffractive optical element 125 is defined by the following equation, in terms of its optical path difference function.

(Equation 3)

$$\Phi(h) = \sum C_n h^{2n} = C_1 h^2 + C_2 h^4 + C_3 h^6 + \ldots$$

In Equation 3, the coefficients and diffraction orders of the function can be appropriately selected. The minimum pitch of the diffractive optical element 125 is preferably 2 $\mu$m or less. It is understood, however, that in some embodiments of the present invention, the minimum pitch may be larger than 2 $\mu$m.

The principle which the diffractive optical element 125 corrects for chromatic aberration effects resulting from temperature-dependent wavelength changes is described below. In the conventional object lens 10 of FIG. 1, which does not have the diffractive optical element 125 formed thereon, the refraction angle increases as the wavelength of the light incident on the object lens 10 gets shorter. Therefore, light passing through the object lens 10 is focused closer to the object lens 10 as the wavelength of the light gets shorter. By way of contrast, in the object lens 100 of FIG. 2, as the wavelength of light incident on the diffractive optical element 125 increases, the diffractive angle increases. Therefore, light having a longer wavelength is focused closer to the diffractive optical element 125. Thus, the chromatic aberrations associated with a given change in wavelength have opposite effects on the object lens 100 with the diffractive optical element 125 and the object lens 10 without the diffractive optical element 125. Hence, the provision of the diffractive optical element 125 on a surface 120, 140 of the object lens 100 results in these effects being offset and/or reduced.

Table 1 shows data relating to a first design of the object lens 100, according to the present embodiment, while Table 2 shows the inclined angle of the first surface 120 calculated from the first design data. As shown in FIG. 2, the inclined angle is an angle $\theta$ between the first surface 120 and a surface perpendicular to the optical axis.

Table 1

| Surface | Radius curvature | Thickness | Material |
|---|---|---|---|
| Object surface | $\infty$ | $\infty$ | |
| First surface 120 | 1.50588 | D=2.1 | n=1.524037 |
| | K : -0.594402<br>A: 0.201658E-01 B: 0.308932E-02 C: 0.541844E-02<br>D: -.566968E-02 E: 0.182870E-02 F: 0.369368E-02<br>G: -.432136E-02 H: 0.183528E-02 J: -.290991E-03<br>DOE $\quad$ $C_1$: -4.0000E-02 Diffraction order: 2 | | |
| Second surface 140 | -2.68405 | WD=0.476 | |
| | K:-77.786543<br>A: 0.157763E+00 B: -.320055E+00 C: 0.370457E+00<br>D: -.322595E+00 E: 0.167692E+00 F: -.367441E-01 | | |
| Disk surface | $\infty$ | 0.0875 | n=1.G21210 |
| Recording surface | $\infty$ | 0 | |
| Effective diameter (mm) | 3 | f(mm) | 1.765 |
| NA | 0.85 | $f_D$(mm) | 6.25 |
| Chromatism ($\mu$m/nm) | 0.4 | $f_D$/f $f_D$/f | 3.54 |

Table 2

| Light ray height (h) | Aspherical surface SAG (z) | Angle (degree, minute, second) |
|---|---|---|
| 0.000000 | 0.000000 | 0 0 0 |
| 0.061000 | 0.001511 | 2 50 11 |
| 0.122000 | 0.006049 | 5 40 18 |
| 0.183000 | 0.013636 | 8 30 13 |
| ..... | | |
| 1.098000 | 0.558408 | 49 37 21 |
| 1.403000 | 1.017861 | 62 2 21 |
| 1.464000 | 1.136538 | 63 19 14 |
| 1.525000 | 1.256518 | 62 3 15 |

Table 3 shows data relating to a second design of object lens 100, according to the present embodiment, and Table 4 shows the inclined angle of the first surface 120 calculated from the second design data.

Table 3

| Surface | Radius curvature | Thickness | Material |
|---|---|---|---|
| Object surface | ∞ | ∞ | |
| First surface 120 | 1.42398 | D=2.1 | n=1.524037 |
| | K: -0.613626<br>     A: 0.168879E-01 B: 0.296671E-02 C: 0.514082E-02<br>     D: -.638958E-02 E: 0.214154E-02 F: 0.384683E-02 G:-.439901E-02 H: 0.177746E-02 J: -.261805E-03<br>DOE     $C_1$: -2.7000E-02 Diffraction order: 2 | | |
| Second surface 140 | -2.76020 | WD=0.582048 | |
| | K:-54.159462<br>     A: 0.149905E+00 B: -.312869E+00 C: 0.415648E+00<br>     D:-.327140E+00 E: 0.114403E+00 F:-.830868E-02 | | |
| Disk surface | ∞ | 0.0875 | n=1.621210 |
| Recording surface | ∞ | 0 | |
| Effective diameter (mm) | 3 | f(mm) | 1.848 |
| NA | 0.85 | $f_D$(mm) | 9.26 |
| Chromatism (μm/nm) | 0.3 | $f_D$/f | 5.0 |

Table 4

| Light ray height (h) | Aspherical surface SAG (z) | Angle (degree, minute, second) |
|---|---|---|
| 0.000000 | 0.000000 | 0 0 0 |
| 0.061000 | 0.001307 | 2 27 16 |
| 0.122000 | 0.005234 | 4 54 38 |
| 1.403000 | 0.881951 | 58 33 35 |
| 1.464000 | 0.985883 | 60 27 42 |
| 1.525000 | 1.095182 | 60 45 56 |

Table 5 shows data relating to a third design of the object lens 100, according to the present embodiment and Table 6 shows the inclined angle of the first surface 120 calculated from the third design data.

Table 5

| Surface | Radius curvature | Thickness | Material |
|---|---|---|---|
| Object surface | ∞ | ∞ | |
| First surface 120 | 1.36777 | D=2.2 | n=1.524037 |
| | K: -0.613626<br>     A:0.188225E-01 B: 0.231601E-02 C: 0.637960E-02<br>     D: -.634742E-02 E: 0.195236E-02 F: 0.385430E-02 G:-.434228E-02 H: 0.179845E-02 J: -.278102E-03<br>DOE     $C_1$: -2.7000E-02 Diffraction order: 2 | | |
| Second surface 140 | -1.93867 | WD=0.456855 | |
| | K:-51.863458<br>     A: 0.175692E+00 B: -.320377E+00 C: 0.363445E+00<br>     D: -.306373E+00 E: 0.149953E+00 F: -.285943E-01 | | |

(continued)

| Surface | Radius curvature | Thickness | Material |
|---|---|---|---|
| Disk surface | ∞ | 0.0875 | n=1.621210 |
| Recording surface | ∞ | 0 | |
| Effective diameter (mm) | 3 | f(mm) | 1.755 |
| NA | 0.85 | $f_D$(mm) | 9.26 |
| Chromatism (μm/nm) | 0.2 | $f_D/f$ | 5.27 |

Table 6

| Light ray height (h) | Aspherical surface SAG (z) | Angle (degree, minute, second) |
|---|---|---|
| 0.000000 | 0.000000 | 0 0 0 |
| 0.061000 | 0.001361 | 2 33 20 |
| ....... | | |
| 1.403000 | 0.950131 | 61 28 46 |
| 1.464000 | 1.067096 | 63 13 23 |
| 1.525000 | 1.188500 | 62 50 10 |

Table 7 shows data relating to a fourth design of the object lens 100, according to the present embodiment, and Table 8 shows the inclined angle of the first surface 120 calculated from the fourth design data.

Table 7

| Surface | Radius curvature | Thickness | Material |
|---|---|---|---|
| Object surface | ∞ | ∞ | |
| First surface 120 | 1.36777 | D=1.701 | n=1.524037 |
| | K : -0.621883<br>        A: 0.355344E-01 B:0.80909E-02 C: 0.203121E-01<br>        D:-.391596E-01 E: 0.188977E-01 F:0.571164E-01 G: -.102500E+00 H: 0.655183E-01 J: -.159189E-01<br>    DOE        $C_1$: -4.938E-02 Diffraction order: 2 | | |
| Second surface 140 | -1.93867 | WD=0.343 | |
| | K:-51.863458<br>        A: 0.175692E+00 B: -.320377E+00 C: 0.363445E+00<br>        D: -.306373E+00 E: 0.149953E+00 F: -.285943E-01 | | |
| Disk surface | ∞ | 0.0875 | N=1.621210 |
| Recording surface | ∞ | 0 | |
| Effective diameter (mm) | 3 | f(mm) | 1.4286 |
| NA | 0.81 | $f_D$(mm) | 5.06 |
| Chromatism (μm/nm) | 0.58 | $f_D/f$ | 3.2 |

Table 8

| Light ray height (h) | Aspherical surface SAG (z) | Angle (degree, minute, second) |
|---|---|---|
| 0.000000 | 0.000000 | 0 0 0 |

(continued)

| Light ray height (h) | Aspherical surface SAG (z) | Angle (degree, minute, second) |
|---|---|---|
| 0.047000 | 0.000886 | 2 9 33 |
| ....... | | |
| 1.081000 | 0.573766 | 51 35 3 |
| 1.128000 | 0.634023 | 52 16 44 |
| 1.175000 | 0.693684 | 50 38 10 |

Table 9 shows data relating to a fifth design of the object lens 100, according to the present embodiment and Table 10 shows the inclined angle of the first surface 120 calculated from the fifth design data.

Table 9

| Surface | Radius curvature | Thickness | Material |
|---|---|---|---|
| Object surface | $\infty$ | $\infty$ | |
| First surface 120 | 1.78756 | D=2.1500 | n=1.524037 |
| | K: -0.600214<br>    A:0.203789E-01 B:0.319915E-02 C:0.600509E-02<br>    D: -.720879E-02 E: 0.242878E-02 F: 0.397296E-02 G: -.443816E-02 H: 0.174151E-02 J: -.248781E-03<br>DOE      $C_1$: -5.8814E-02 Diffraction order: 2 | | |
| Second surface 140 | -4.11230 | WD=0.4 | |
| | K:-51.863458<br>    A: 0.175692E+00 B: -.320377E+00 C: 0.363445E+00<br>    D: -.306373E+00 E: 0.149953E+00 F: -.285943E-01 | | |
| Disk surface | $\infty$ | 0.0875 | N=1.621210 |
| Recording surface | $\infty$ | 0 | |
| Effective diameter (mm) | 1.5 | f(mm) | 1.783 |
| NA | 0.84 | $f_D$(mm) | 4.25 |
| Chromatism ($\mu$m/nm) | 1.0 | $f_D$/f | 2.38 |

Table 10

| Light ray height (h) | Aspherical surface SAG (z) | Angle (degree, minute, second) |
|---|---|---|
| 0.000000 | 0.000000 | 0 0 0 |
| 0.060000 | 0.001007 | 1 55 25 |
| ....... | | |
| 1.320000 | 0.613914 | 50 15 58 |
| 1.380000 | 0.689927 | 53 07 03 |
| 1.440000 | 0.773958 | 55 43 30 |
| 1.500000 | 0.865350 | 57 26 38 |

In each of the five designs corresponding to the above data, blue light having a 407.7 nm wavelength is used, and "$f_D$/f" is a value indicating the refractivity of the diffractive optical element 125. "f" is a focal distance of the overall object lens. "$f_D$" is an amount representing the focal distance of only the diffractive optical element, which is determined from the coefficients $C_1$, $C_2$, $C_3$ ... of the optical path difference function expressed by Equation 3. Each of the five object lenses according to the above designs has a NA higher than 0.8. The diffraction order of the diffractive optical element 125 is set to the second order. "$F_D/f$" has a value in a range between about 2.38 through 5.27, and can be adjusted to have a value less than 5 by appropriately selecting a hologram constant $C_1$. Also, the chromatism of the five object lenses according to the five designs has a value of not more than 1.0 $\mu$m/nm, which means that the focus shift with respect to the wavelength change of 1 nm is not more than 1.0 um. The inclination angle of the lens surface has a maximum value of not more than 63°.

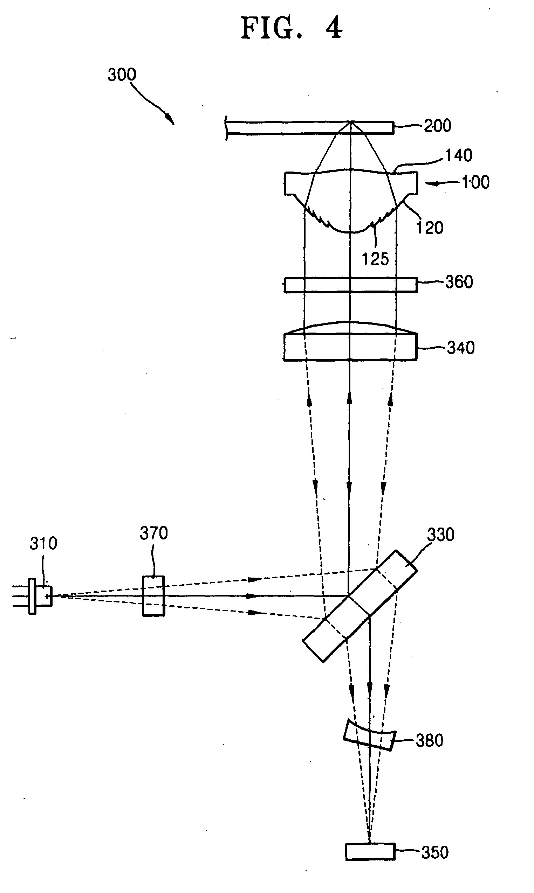

FIG. 4 shows the structure of an optical pickup device 300 according to an embodiment of the present invention. The optical pickup device 300 is an apparatus for recording and/or reproducing information to and/or from an optical recording medium 200 and includes a light source 310, an optical path changing member 330, the object lens 100, and a photodetector 350. A DVD, HD-DVD, or Blu-ray disc may be used as the recording medium 200. It is understood that other types of optical discs may also be used as the recording medium 200, such as CDs, etc.

The light source 310 generates and emits light having a predetermined wavelength and is preferably, but not necessarily, formed as a laser diode LD. When a Blu-ray disc is used as the recording medium 200, blue light is used which has a wavelength of about 405 nm through 408 nm so that recording and/or reproduction of information to and/or from the Blu-ray disc is possible.

The optical path changing member 330 is arranged on an optical path between the light source 310 and the object lens 100 to change the path of incident light. Various types of component may be used as the optical path changing member 330, such as, for example, a polarizing beam splitter that reflects light of one polarization of the incident light and transmits light of the other polarization. The optical path changing member 330 reflects light output by the light source 310 towards the recording medium 200 and transmits the light reflected from the recording medium 200 towards the photodetector 350.

The object lens 100 is arranged between the light source 310 and the recording medium 200. The object lens 100 has a diffractive optical element 125 disposed on one of its first and second surfaces 120, 140 to correct chromatism and decrease the maximum inclination angle, and also has a high NA. The structure and operation of the object lens 100 are substantially the same as the object lens 100 of FIG. 2 and those designs which generated the above design data.

The photodetector 350 receives light reflected by the recording medium 200 that has passed through the object lens 100 and the optical path changing member 330, and detects an information signal and an error signal therefrom. It is to be understood that the present invention is not limited to optical pickup devices 300 having the configuration shown in FIG. 4 and that the photodetector 350 may instead be disposed in other locations.

A collimating lens 340 is disposed on the optical path between the object lens 100 and the optical path changing member 330 to converge incident divergent light into a parallel beam. A quarter wave plate 360 is disposed on the optical path between the optical path changing member 330 and the object lens 100, to transmit light having a circular polarization to the recording medium 200. Also, a grating 370 is disposed on the optical path between the light source 310 and the optical path changing member 330 to diffract and transmit incident light. An astigmatic lens 380, capable of correcting coma aberration, is disposed on the optical path between the optical path changing member 330 and the photodetector 350 and inclined in a direction opposite to a direction in which the optical path changing member 30 is inclined.

It is to be understood that optical pickup devices having alternative configurations may be used in place of that shown in FIG. 4. For instance, one or more of the quarter wave plate 360, collimating lens 340, grating 370 and astigmatic lens 380 may be located at alternative positions in the optical pickup device, combined together or removed.

As discussed above, since the object lenses 100 of the described embodiments include a diffractive optical element disposed on one surface, have a high NA and a low inclination angle, they can be mass produced at low cost.

Also, the optical pickup device of FIG. 4 comprises such an object lens so that a high NA may be maintained and chromatism characteristics may be improved. The optical pickup device may be used in various types of optical recording and/or reproducing apparatuses. Thus, information can be recorded and/or reproduced to and/or from various types of high density optical discs, such as Blu-ray discs (BDs) having recording densities of about 20 GB or more.

While described in a context in which blue light is used, it is understood that other embodiments of the invention may be used with light of other wavelengths. Furthermore, although the embodiments have been described in terms of apparatus for reproducing HD-DVD and/or Blu-ray discs, it is understood that the apparatus can be used with other media in addition to, or instead of, HD-DVD and Blu-ray discs.

Although a few embodiments of the present invention have been shown and described, it would be appreciated by those skilled in the art that changes may be made in this embodiment without departing from the invention, the scope of which is defined in the appended claims.

**Claims**

1.  An object lens (100) for focusing light emitted from a light source (310) onto a recording medium (200), the object lens (100) comprising:

a first surface (120) for receiving incident light;
a second surface (140) through which light can exit the lens (100); and **characterized by**
a diffractive optical element (125) disposed on at least one of the first and second surfaces (120, 140), having a refractivity satisfying the condition $f_D/f < 5$, $f_D$ being a focal distance of only the diffractive optical element (125) and f being a focal distance of the overall object lens (100);
wherein the object lens (100) has a numerical aperture of 0.75 or greater.

2. The object lens (100) of claim 1, wherein the diffractive optical element (125) is disposed on the first surface (120).

3. The object lens (100) of claim 1 or 2, wherein an inclination angle between the first surface (120) and a surface perpendicular to an optical axis of the object lens (100), and an inclination angle between the second surface (140) and the surface perpendicular to the optical axis, are 63° or less.

4. The object lens (100) of claim 1, 2 or 3, wherein chromatism is 1 $\mu$m /nm or less.

5. The object lens (100) of any of the preceding claims, wherein a diffraction order of the diffractive optical element (125) is 2.

6. The object lens (100) of any of the preceding claims, wherein a minimum pitch of the diffractive optical element (125) is 2 $\mu$m or greater.

7. The object lens (100) of any of the preceding claims, wherein an effective diameter of the object lens (100) through which light passes is no more than 1.5 times a central thickness of the object lens (100).

8. The object lens (100) of any of the preceding claims, therein the object lens (100) is formed of a polymer material.

9. The object lens (100) of any of claims 1 to 7, wherein the object lens (100) is formed of plastic.

10. The object lens of any of the preceding clalims, wherein at least one of the first and second surfaces (120, 140) comprises an a spherical surface defined by the equation:

$$z(h) = \frac{\dfrac{h^2}{R}}{1 + \sqrt{1 - (1+K)\dfrac{h^2}{R}}} + Ah^2 + Bh^6 + Ch^8 + Dh^{10} + Eh^{12} + Fh^{14} + \ldots,$$

h being a height from an optical axis of the object lens (100), z being a depth from an apex of the object lens (100), R being a radius of curvature of the object lens (100), K being a conic constant, and A, B, C, D, E, F... being aspherical constants.

11. The object lens of any of the preceding claims, wherein the diffractive optical element (125) has an optical path difference defined by the equation:

$$\Phi(h) = \sum C_n h^{2n} = C_1 h^2 + C_2 h^4 + C_3 h^6 + \ldots,$$

n being an integer, $C_n$ being a diffraction coefficient, and h being a height from an optical axis of the object lens (100).

12. An optical pickup device (300) to record and/or reproduce information to and/or from a recording medium, the optical pickup device (300) comprising:

a light source (310) arranged to emit light;
a photodetector (350) arranged to receive light reflected by the rewording medium (200) and to detect an information signal from the received light; and

**characterized by** an object lens (100) according to any of claims 1 to 11, arranged to focus the emitted light onto the recording medium (200).

13. The optical pickup device (300) according to claim 22, comprising:

an optical path changing member (330) arranged between the light source and the recording medium (200); wherein the object lens (100) is arranged between the optical path changing member (330) and the recording medium (200) and the photodetector (350) is arranged to receive the reflected light via the object lens (100) and the optical path changing member (330).

14. The optical pickup device of claim 12 or 13, wherein the light source (310) is configured to emit blue light having a wavelength in a range of 405 nm to 408 nm.

15. The optical pickup device of claim 12, 13 or 14, configured to read and/or reproduce information to and/or from a recording medium (200) having a recording capacity of at least 20 GB.

16. The optical pickup device of any of claims 12 to 15, configured to read and/or reproduce information to and/or from a recording medium (200) in the form of one or more of:

a Blu-ray disk; and
a High-Definition DVD.


**Patentansprüche**

1. Objektivlinse (100) zum Fokussieren von Licht, das von einer Lichtquelle (310) abgegeben wird, auf ein Aufzeichnungsmedium (200), die Objektivlinse (100) umfassend:

eine erste Oberfläche (120) zum Empfangen von einfallendem Licht;
eine zweite Oberfläche (140), durch die Licht aus der Linse (100) austreten kann; und **gekennzeichnet durch** ein beugendes optisches Element (125), das an mindestens einem der ersten und zweiten Oberflächen (120, 140) angeordnet ist und ein Brechungsvermögen aufweist, das die Bedingung $f_D/f < 5$ erfüllt, wobei $f_D$ eine Brennweite nur des beugenden optischen Elements (125) ist und f eine Brennweite der gesamten Objektivlinse (100) ist;
wobei die Objektivlinse (100) eine numerische Apertur von 0,75 oder größer aufweist.

2. Objektivlinse (100) nach Anspruch 1, wobei das beugende optische Element (125) auf der ersten Oberfläche (120) angeordnet ist.

3. Objektivlinse (100) nach Anspruch 1 oder 2, wobei ein Neigungswinkel zwischen der ersten Oberfläche (120) und einer Oberfläche, die senkrecht zu einer optischen Achse der Objektivlinse (100) steht, und ein Neigungswinkel zwischen der zweiten Oberfläche (140) und der Oberfläche, die senkrecht zu der optischen Achse steht, 63° oder weniger betragen.

4. Objektivlinse (100) nach Anspruch 1, 2 oder 3, wobei Chromatismus 1 $\mu$m/nm oder weniger beträgt.

5. Objektivlinse (100) nach einem der vorstehenden Ansprüche, wobei eine Beugungsordnung des beugenden optischen Elements (125) 2 beträgt.

6. Objektivlinse (100) nach einem der vorstehenden Ansprüche, wobei ein minimaler Abstand des beugenden optischen Elements (125) 2 $\mu$m oder mehr beträgt.

7. Objektivlinse (100) nach einem der vorstehenden Ansprüche, wobei ein effektiver Durchmesser der Objektivlinse (100), durch den Licht passiert, nicht mehr als das 1,5-fache einer zentralen Dicke der Objektivlinse (100) beträgt.

8. Objektivlinse (100) nach einem der vorstehenden Ansprüche, wobei die Objektivlinse (100) aus einem Polymermaterial gebildet ist.

9. Objektivlinse (100) nach einem der Ansprüche 1 bis 7, wobei die Objektivlinse (100) aus Kunststoff gebildet ist.

10. Objektivlinse nach einem der vorstehenden Ansprüche, wobei mindestens eine der ersten und zweiten Oberflächen (120, 140) eine asphärische Oberfläche umfasst, die durch die folgende Gleichung definiert ist:

$$z(h) = \frac{\dfrac{h^2}{R}}{1 + \sqrt{1 - (1+K)\dfrac{h^2}{R}}} + Ah^2 + Bh^6 + Ch^8 + Dh^{10} + Eh^{12} + Fh^{14} + \ldots,$$

wobei h eine Höhe von einer optischen Achse der Objektivlinse (100) ist, z eine Tiefe von einem Scheitelpunkt der Objektivlinse (100) ist, R ein Krümmungsradius der Objektivlinse (100) ist, K eine konische Konstante ist und A, B, C, D, E, F ... asphärische Konstanten sind.

11. Objektivlinse nach einem der vorstehenden Ansprüche, wobei das beugende optische Element (125) einen Strahlengangunterschied aufweist, der durch die folgende Gleichung definiert ist:

$$\Phi(h) = \sum C_n h^{2n} = C_1 h^2 + C_2 h^4 + C_3 h^6 + \ldots,$$

wobei n eine ganze Zahl ist, $C_n$ ein Beugungskoeffizient ist und h eine Höhe von einer optischen Achse der Objektivlinse (100) ist.

12. Optische Abtastvorrichtung (300) zum Aufzeichnen und/oder Reproduzieren von Informationen auf und/oder von einem Aufzeichnungsmedium, die optische Abtastvorrichtung (300) umfassend:

eine Lichtquelle (310), die angeordnet ist, um Licht abzugeben;
einen Fotodetektor (350), der angeordnet ist, um Licht zu empfangen, das von dem Aufzeichnungsmedium (200) reflektiert wird, und um ein Informationssignal von dem empfangenen Licht zu erfassen; und
**gekennzeichnet durch** eine Objektivlinse (100) nach einem der Ansprüche 1 bis 11, die angeordnet ist, um das abgegebene Licht auf das Aufzeichnungsmedium (200) zu fokussieren.

13. Optische Abtastvorrichtung (300) nach Anspruch 12, umfassend:

ein Strahlengang-Änderungsglied (330), das zwischen der Lichtquelle und dem Aufzeichnungsmedium (200) angeordnet ist;
wobei die Objektivlinse (100) zwischen dem Strahlengang-Änderungsglied (330) und dem Aufzeichnungsmedium (200) angeordnet ist und der Fotodetektor (350) angeordnet ist, um das reflektierte Licht über die Objektivlinse (100) und das Strahlengang-Änderungsglied (330) zu empfangen.

14. Optische Abtastvorrichtung nach Anspruch 12 oder 13, wobei die Lichtquelle (310) konfiguriert ist, um blaues Licht mit einer Wellenlänge in einem Bereich von 405 nm bis 408 nm abzugeben.

15. Optische Abtastvorrichtung nach Anspruch 12, 13 oder 14, die konfiguriert ist, um Informationen zu und/oder von einem Aufzeichnungsmedium (200) mit einer Aufzeichnungskapazität von mindestens 20 GB zu lesen und/oder zu reproduzieren.

16. Optische Abtastvorrichtung nach einem der Ansprüche 12 bis 15, die konfiguriert ist, um Informationen zu und/oder von einem Aufzeichnungsmedium (200) in der Form von einem oder mehr von:

einer Blu-ray Disc; und
einer High-Definition DVD
zu lesen und/oder zu reproduzieren.

EP 1 906 399 B1

**Revendications**

1. Lentille d'objectif (100) pour focaliser la lumière émise par une source de lumière (310) sur un support d'enregistrement (200), la lentille d'objectif (100) comprenant:

   une première surface (120) pour recevoir une lumière incidente;
   une seconde surface (140) à travers laquelle la lumière peut sortir de la lentille (100); et **caractérisée par**
   un élément optique de diffraction (125) disposé sur au moins l'une des première et seconde surfaces (120, 140), ayant une réfractivité satisfaisant la condition $f_D/f < 5$, $f_D$ étant une focale de l'élément optique de diffraction (125) seulement et f étant une focale de la lentille d'objectif globale (100);
   la lentille d'objectif (100) ayant une ouverture numérique de 0,75 ou plus.

2. Lentille d'objectif (100) selon la revendication 1, dans laquelle l'élément optique de diffraction (125) est disposé sur la première surface (120).

3. Lentille d'objectif (100) selon la revendication 1 ou 2, dans laquelle un angle d'inclinaison entre la première surface (120) et une surface perpendiculaire à un axe optique de la lentille d'objectif (100), et un angle d'inclinaison entre la seconde surface (140) et la surface perpendiculaire à l'axe optique sont de 63° ou moins.

4. Lentille d'objectif (100) selon la revendication 1, 2 ou 3, dans laquelle le chromatisme est de 1 $\mu$m / nm ou moins.

5. Lentille d'objectif (100) selon l'une quelconque des revendications précédentes, dans laquelle un ordre de diffraction de l'élément optique de diffraction (125) est 2.

6. Lentille d'objectif (100) selon l'une quelconque des revendications précédentes, dans laquelle un pas minimum de l'élément optique de diffraction (125) est 2 $\mu$m ou plus.

7. Lentille d'objectif (100) selon l'une quelconque des revendications précédentes, dans laquelle un diamètre effectif de la lentille d'objectif (100) au travers duquel passe la lumière ne dépasse pas 1,5 fois une épaisseur centrale de la lentille d'objectif (10).

8. Lentille d'objectif (100) selon l'une quelconque des revendications précédentes, la lentille d'objectif (100) étant formée en un matériau polymère.

9. Lentille d'objectif (100) selon l'une quelconque des revendications 1 à 7, dans laquelle la lentille d'objectif (100) est formée de plastique.

10. Lentille d'objectif selon l'une quelconque des revendications précédentes, dans laquelle au moins l'une des première et seconde surfaces (120, 140) comprend une surface asphérique définie par l'équation:

$$z(h) = \frac{\dfrac{h^2}{R}}{1 + \sqrt{1 - (1 + K)\dfrac{h^2}{R}}} + Ah^2 + Bh^6 + Ch^8 + Dh^{10} + Eh^{12} + Fh^{14} + \ldots,$$

    h étant une hauteur depuis un axe optique de la lentille d'objectif (100), z étant une profondeur depuis un sommet de la lentille d'objectif (100), R étant un rayon de courbure de la lentille d'objectif (100), K étant une constante conique, et A, B, C, D, E, F ... étant des constantes asphériques.

11. Lentille d'objectif selon l'une quelconque des revendications précédentes, dans laquelle l'élément optique de diffraction (125) a une différence de trajectoire optique définie par l'équation:

$$\Phi(h) = \sum C_n h^{2n} = C_1 h^2 + C_2 h^4 + C_3 h^6 + \ldots,$$

n étant un nombre entier, $C_n$ étant un coefficient de diffraction, et h étant une hauteur depuis un axe optique de la lentille d'objectif (100).

12. Dispositif de lecture optique (300) pour enregistrer et/ou reproduire des informations sur et/ou depuis un support d'enregistrement, le dispositif de lecture optique (300) comprenant:

   une source de lumière (310) agencée pour émettre une lumière;
   un photodétecteur (350) agencé pour recevoir la lumière réfléchie par le support d'enregistrement (200) et détecter un signal d'information à partir de la lumière reçue; et
   **caractérisé par** une lentille d'objectif (100) selon l'une quelconque des revendications 1 à 11, agencée pour focaliser la lumière émise sur le support d'enregistrement (200).

13. Dispositif de lecture optique (300) selon la revendication 12, comprenant:

   un élément de changement de trajectoire optique (330) agencé entre la source de lumière et le support d'enregistrement (200);
   dans lequel la lentille d'objectif (100) est agencée entre l'élément de changement de trajectoire optique (330) et le support d'enregistrement (200) et le photodétecteur (350) est agencé pour recevoir la lumière réfléchie par l'intermédiaire de la lentille d'objectif (100) et de l'élément de changement de trajectoire optique (330).

14. Dispositif de lecture optique selon la revendication 12 ou 13, dans lequel la source de lumière (310) est configurée pour émettre une lumière bleue ayant une longueur d'onde comprise dans une plage de 405 nm à 408 nm.

15. Dispositif de lecture optique selon la revendication 12, 13 ou 14, configuré pour lire et/ou reproduire des informations sur et/ou depuis un support d'enregistrement (200) ayant une capacité d'enregistrement d'au moins 20 GB.

16. Dispositif de lecture optique selon l'une quelconque des revendications 12 à 15, configuré pour lire et/ou reproduire des informations sur et/ou depuis un support d'enregistrement (200) ayant la forme d'un ou de plusieurs d'un:

   disque Blu-ray; et
   DVD de haute définition.

# FIG. 1 (PRIOR ART)

# FIG. 2

# FIG. 3

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020097504 A
- US 20040114245 A